# FASCICULE DE BREVET EUROPEEN

(11) **EP 2 071 141 B1**
(45) Date de publication et mention de la délivrance du brevet: **22.06.2011**
(21) Numéro de dépôt: 08168912.7
(22) Date de dépôt: 12.11.2008
(51) Int. Cl.: F01D 25/24, F02C 7/28

(54) **Étanchéité de fixation de support de palier dans une turbomachine**
Dichte Befestigung eines Lagerträgers in einem Turbotriebwerk
Watertigh fixing of a bearing support in a turbomachine

(30) Priorité: 14.12.2007 FR 0708706
(43) Date de publication de la demande: 17.06.2009
(73) Titulaire: Snecma, 75015 Paris (FR)
(72) Inventeur: Servant, Régis, Eugène, Henri, 91270 Vigneux sur Seine (FR)
(74) Mandataire: Ramey, Daniel

(56) Documents cités:
- EP-A- 1 008 726
- EP-A- 1 314 854
- EP-A- 1 403 468
- EP-A- 1 659 266
- EP-A- 1 857 657

## Description

L'invention se rapporte à une turbomachine équipée de paliers de guidage d'arbre portés par des supports fixés à un carter de la turbomachine au moyen de vis fusibles.

Une turbomachine à double flux comprend une soufflante agencée à l'extrémité amont et entraînée en rotation par un arbre guidé par des paliers amont et aval portés par un premier et un second support annulaire, respectivement. Le palier amont est porté par l'extrémité amont du premier support, dont l'extrémité aval comprend une pluralité d'orifices répartis sur sa circonférence permettant sa fixation par boulonnage sur une partie radialement externe du second support lequel est fixé par boulonnage à un carter intermédiaire situé en aval d'un compresseur basse-pression.

L'extrémité aval du premier support comprend un rebord annulaire formé avec une pluralité d'encoches recevant les parties amont des vis de fixation du premier support sur le second support. Ces encoches débouchent dans des cavités fraisées dans le rebord du support pour recevoir les têtes des vis. Des rondelles sont engagées sur les vis pour former des surfaces d'appui continu des têtes des vis sur le rebord du support.

L'étanchéité à l'huile de lubrification des paliers amont et aval est réalisée au moyen d'un premier joint annulaire situé radialement à l'extérieur des vis de fixation dans une gorge annulaire de la face radiale amont du second support qui est en contact avec l'extrémité aval du premier support, un second joint annulaire étant disposé dans une gorge annulaire entre deux surfaces cylindriques du second support et du carter intermédiaire.

Cependant, ce type de fixation présente plusieurs inconvénients. Tout d'abord, la réalisation des cavités du rebord aval du premier support est longue et délicate. De plus, les vis montées dans les encoches du premier support ne sont pas retenues tant que le second support n'est pas en place, ce qui complique l'assemblage.

Les vis de fixation utilisées sont des vis fusibles. Ainsi, en cas de perte d'aube, le balourd généré se traduit au niveau du premier support par un effort de traction sur les vis de fixation qui sont aptes à céder lorsque la charge appliquée dépasse une valeur prédéterminée. Cependant, la fixation de ces vis à l'intérieur du premier support conduit à l'éjection des débris des vis dans l'enceinte inter-paliers, ce qui peut endommager les paliers amont et aval et d'autres pièces qui y sont situés telles que les déshuileurs d'enceinte, les gicleurs d'huile, etc. De plus, les vis sont en contact avec l'huile de lubrification des paliers amont et aval et doivent respecter des critères stricts de propreté.

Le document EP 1659266A1 décrit un dispositif de découplage de deux paliers amont et aval guidant en rotation un arbre d'entraînement d'une soufflante agencée à l'extrémité amont d'une turbomachine. Le palier amont est relié à un premier support annulaire fixé par des vis fusibles sur un carter par l'intermédiaire d'un flasque annulaire lequel est fixé à son extrémité radialement interne sur une bague externe du palier aval et porte l'extrémité radialement interne d'un second support dont l'extrémité radialement externe est fixée au premier support. Ce flasque a une partie en U et assure le blocage en rotation des premier et second supports de paliers, la rétention radiale de l'arbre d'entraînement et la retenue axiale de la soufflante en cas de rupture de l'arbre d'entraînement.

La présente invention a notamment pour but d'éviter les inconvénients de la technique antérieure d'une façon simple, efficace et économique.

Elle propose, à cet effet, une turbomachine comprenant un arbre guidé dans un palier amont porté par un premier support annulaire fixé par des vis à un carter par l'intermédiaire d'un second support annulaire portant un palier aval de guidage de l'arbre, caractérisée en ce que les extrémités des vis de fixation du premier support sur le second support sont recouvertes par un couvercle annulaire fixé à étanchéité sur le second support ou sur le carter.

L'utilisation d'un couvercle annulaire permet de recouvrir par une pièce unique toutes les extrémités des vis et d'éviter, en cas de perte d'aube, que des débris des vis s'échappent à l'intérieur de l'enceinte inter-paliers.

Avantageusement, les vis de fixation du premier support sont à l'extérieur de ce support, ce qui permet d'éviter que des particules solides présentes sur les vis fusibles pénètrent dans l'enceinte inter-paliers et polluent l'huile de lubrification des paliers amont et aval. La disposition externe des vis par rapport au premier support permet aussi de maintenir, en cas de perte d'aube, les débris des parties amont des vis fusibles en dehors de l'enceinte inter-paliers.

La fixation de l'extrémité aval du premier support de palier au second support est réalisée plus simplement et l'utilisation de rondelles n'est plus nécessaire puisque les têtes des vis peuvent être en appui sur toute leur circonférence. La fabrication du premier support est également simplifiée puisque cette pièce ne présente pas une géométrie complexe à son extrémité aval comme dans la technique antérieure.

Avantageusement, le couvercle annulaire est à section en U et comprend deux parois parallèles engagées à étanchéité sur une paroi cylindrique du second support et à l'intérieur d'une paroi cylindrique du carter.

Selon une autre caractéristique de l'invention, un joint annulaire d'étanchéité est monté dans une gorge annulaire d'une face radiale amont du second support ou d'une face radiale aval correspondante du premier support et des joints annulaires sont montés dans des gorges annulaires des parois du couvercle ou des parois cylindriques du second support et du couvercle, ce qui permet d'assurer avec un petit nombre de joints l'étanchéité de la fixation du premier support sur le second support et évite que de l'huile de n'échappe en dehors de l'enceinte inter-paliers par les vis.

Afin de garantir une bonne étanchéité en fonctionnement, le couvercle sera réalisé de préférence dans un matériau ayant un coefficient de dilatation semblable à ceux du second support et du carter.

Le maintien du couvercle en position de recouvrement des extrémités des vis est réalisé grâce à un rebord cylindrique aval du couvercle fixé par des boulons sur un rebord cylindrique aval du second support. Le couvercle peut également être directement fixé par boulonnage sur le carter.

L'invention concerne également un couvercle annulaire de recouvrement étanche des vis de fixation d'un support de palier amont de guidage d'un arbre dans une turbomachine telle que décrite précédemment, caractérisé en ce que ce qu'il a une section en U formée par deux parois cylindriques parallèles radialement interne et radialement externe respectivement, dont au moins la paroi radialement externe comporte une gorge annulaire externe de montage d'un joint d'étanchéité.

Selon une autre caractéristique de l'invention, le couvercle comprend un rebord cylindrique s'étendant dans le prolongement de sa paroi cylindrique radialement interne et à l'opposé de celle-ci et comportant des orifices régulièrement répartis de passage de moyens de fixation.

Le couvercle peut être réalisé en matériau composite ou en matériau métallique, par exemple en titane.

L'invention sera mieux comprise et d'autres détails, avantages et caractéristiques de l'invention apparaîtront à la lecture de la description suivante faite à titre d'exemple non limitatif, en référence aux dessins annexés dans lesquels :
- la figure 1 est une demi-vue schématique partielle en coupe axiale d'une turbomachine à support de palier selon la technique antérieure ;
- la figure 2 est une vue schématique en perspective depuis l'aval du support du palier amont de la figure 1 ;
- la figure 3 est une demi-vue schématique partielle en coupe axiale d'une turbomachine à support de palier selon l'invention ;
- la figure 4 est une vue à plus grande échelle de la partie délimitée en pointillée sur la figure 3.

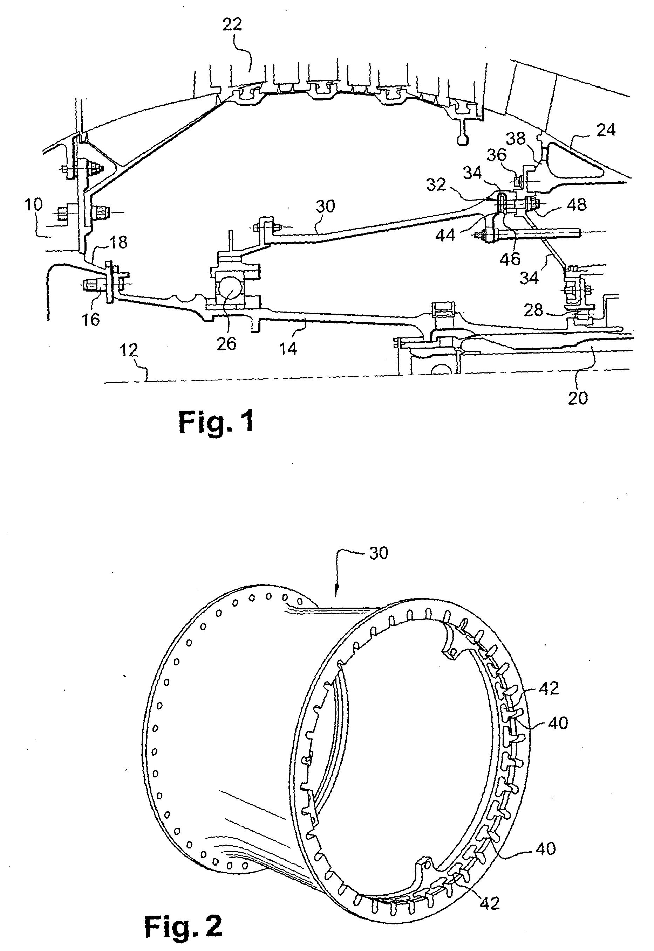

On se réfère tout d'abord à la figure 1 représentant une partie amont d'une turbomachine selon la technique antérieure, qui comprend une roue de soufflante 10 entraînée en rotation autour de l'axe 12 de la turbomachine par un arbre 14 dont l'extrémité amont est fixée par boulonnage 16 à une paroi tronconique 18 solidaire de la roue de soufflante 10. L'arbre 14 est fixé au bout d'un arbre 20 d'une turbine basse-pression (non représentée). La roue de soufflante 10 est solidaire du rotor 22 d'un compresseur basse-pression associé à un carter intermédiaire 24.

L'arbre 14 est supporté et guidé par des paliers amont 26 et aval 28. Le palier amont 26 est porté par l'extrémité amont d'un premier support annulaire 30 dont l'extrémité aval est fixée par des vis fusibles 32 sur une partie radialement externe d'un second support annulaire 34 portant à son extrémité radialement interne le palier aval 28. Le second support 34 est fixé par des boulons 36 sur une bride 38 du carter intermédiaire 24.

L'extrémité aval du premier support 30 comprend des encoches 40 orientées radialement vers l'intérieur de la turbomachine, réparties sur toute la circonférence d'un rebord annulaire du premier support 30 et destinées à recevoir l'extrémité amont des vis fusibles 32 (figure 2). Chaque encoche 40 débouche dans une cavité 42 dans laquelle est logée la tête 44 d'une vis fusible 32. Les têtes 44 des vis fusibles 32 viennent en butée sur les extrémités des encoches 40 lors du serrage des écrous 48 sur les fusibles 32. Des rondelles 46 sont intercalées entre les têtes 44 des vis 32 et les encoches 40 de manière à avoir un appui continu des têtes 44 des vis 32 sur toute leur circonférence.

Les vis fusibles 32 présentent au niveau de leur partie située dans l'encoche 40 un rétrécissement qui permet aux vis 32 de casser en cet endroit lorsque la charge qui leur est appliquée est trop importante. En effet, en cas de perte d'aube, l'apparition d'un balourd sur l'arbre 14 de soufflante se traduit au niveau des vis fusibles 32 par des efforts de traction importants. Le découplage des premier 30 et second 34 supports permet d'accepter ce balourd et de limiter la transmission des efforts au carter intermédiaire 24 et à l'ensemble de la turbomachine.

Ce mode de fixation des premier 30 et second 34 supports présente plusieurs inconvénients déjà indiqués dans ce qui précède.

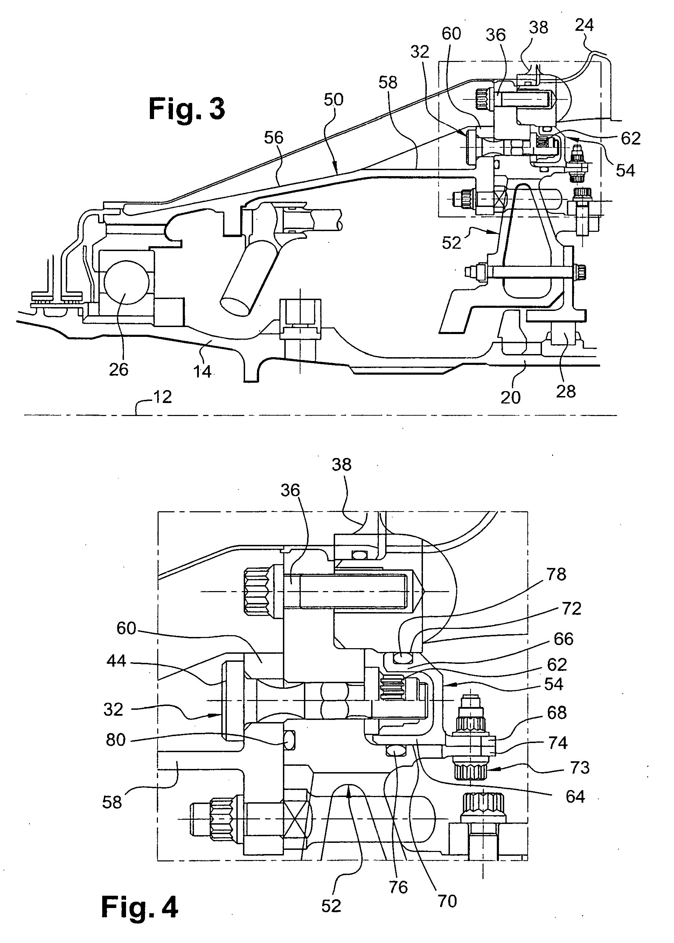

Selon l'invention, ces inconvénients sont évités grâce au fait que, comme représenté en figure 3, l'extrémité aval du premier support 50 est fixée à la partie radialement externe du second support 52 par des vis fusibles 32 qui sont radialement à l'extérieur du premier support 50 dont la fixation étanche est assurée de façon simple et économique.

Le premier support 50 comprend une paroi tronconique 56 à section se réduisant vers l'amont qui porte à son extrémité amont le palier amont 26 et est raccordée à son extrémité aval à une paroi cylindrique 58 dont l'extrémité aval comporte un rebord annulaire 60 s'étendant radialement vers l'extérieur. Des orifices de passage de vis sont formés dans le rebord annulaire 60 et sont alignés avec des orifices correspondants de la partie radialement externe du second support 52 pour recevoir les vis fusibles 32. L'extrémité amont de chaque vis fusible 32 comprend une tête 44 en appui axial sur toute sa circonférence sur la face amont du rebord annulaire 60, son extrémité aval recevant un écrou 62 serré sur la partie radialement externe du second support 52.

Les extrémités aval des vis 32 et les écrous 62 sont recouverts par un couvercle annulaire 54 qui présente une section transverse en U et comprend deux parois parallèles, radialement interne 64 et externe 66, respectivement, la paroi interne 64 étant raccordée à un rebord cylindrique 68 s'étendant vers l'aval et comportant des orifices de passage de vis régulièrement répartis autour de l'axe 12 de la turbomachine.

Le couvercle 54 recouvre l'extrémité aval des vis fusibles 32 et ses parois radialement interne 64 et externe 66 sont engagées à étanchéité sur une paroi cylindrique 70 du second support 52 et dans une paroi cylindrique 72 de la bride 38 du carter intermédiaire 24. Le couvercle 54 est maintenu en position par des vis 73 insérées dans les orifices du rebord cylindrique aval 68 du couvercle 54 et dans des orifices correspondants d'un rebord cylindrique 74 du second support 52.

La paroi radialement externe 66 du couvercle 54 et la paroi cylindrique 70 du second support 52 comprennent chacune une gorge annulaire orientée radialement vers l'extérieur et recevant un joint annulaire d'étanchéité 76, 78. Ces deux joints annulaires 76, 78 évitent que de l'huile de lubrification des paliers amont 26 et aval 28 ne s'échappe par les orifices de passage des vis fusibles 32 et au niveau des zones de contact entre le second support 52 et le carter intermédiaire 24.

Un troisième joint annulaire 80 est monté dans une gorge annulaire d'une face radiale amont du second support 52, cette face amont étant en contact avec une face aval radiale du premier support 50. Ce joint 80 se trouve radialement à l'intérieur des vis fusibles 32 pour éviter une fuite d'huile par les orifices de passage de vis formés dans le rebord 60.

En cas de découplage des premier et second supports 50, 52, le couvercle annulaire 54 permet de contenir les débris des extrémités aval des vis fusibles 32, tandis que la fixation des vis 32 radialement à l'extérieur du premier support 50 permet d'éviter que les débris des têtes 44 des vis 32 pénètrent dans l'enceinte inter-paliers et endommagent les pièces qui y sont situées.

Le couvercle 54 permet également d'étanchéifier l'extrémité aval des vis fusibles 32 et de simplifier la fabrication du premier support 50 puisqu'il n'est plus nécessaire de réaliser des encoches et des cavités dans un rebord de ce support.

L'utilisation de rondelles d'appui n'est plus obligatoire puisque la tête 44 de chaque vis fusible 32 est en appui sur toute sa circonférence sur la face amont du rebord annulaire 60.

L'extrémité radialement externe du second support 52 est fixée au carter intermédiaire 24 au moyen de boulons 36, vissés dans une bride 38 du carter intermédiaire 24.

Avantageusement, le couvercle 54 est réalisé dans un matériau présentant un coefficient de dilatation thermique proche de celui des matériaux du second support 52 et du carter intermédiaire 24, afin de garantir une étanchéité parfaite par les joints annulaires 76, 78, 80 aux températures auxquelles sont soumises ces différentes pièces.

Le couvercle 54 peut être réalisé en matériau composite ou en matériau métallique, tel que du titane par exemple.

Selon une variante de l'invention, le couvercle 54 peut comporter un rebord annulaire radial aval fixé par des boulons sur un rebord annulaire aval du second support 52 ou de la bride 38 du carter intermédiaire 24.

## Revendications

1. Turbomachine comprenant un arbre (14) guidé dans un palier amont (26) porté par un premier support annulaire (50) fixé par des vis (32) à un carter (24) par l'intermédiaire d'un second support annulaire (52) portant un palier aval (28) de guidage de l'arbre (14), **caractérisée en ce que** les extrémités des vis de fixation (32) du premier support sur le second support sont recouvertes par un couvercle annulaire (54) fixé à étanchéité sur le second support (52) ou sur le carter (24).

2. Turbomachine selon la revendication 1, **caractérisée en ce que** les vis de fixation (32) du premier support (50) sont à l'extérieur de ce support (50).

3. Turbomachine selon la revendication 1 ou 2, **caractérisée en ce que** le couvercle (54) est à section en U et comprend deux parois parallèles engagées à étanchéité sur une paroi cylindrique (70) du second support (52) et à l'intérieur d'une paroi cylindrique (72) du carter (24).

4. Turbomachine selon la revendication 3, **caractérisée en ce que** des joints annulaires d'étanchéité (76, 78, 80) sont montés dans des gorges annulaires des parois (64, 66) du couvercle (54) ou des parois cylindriques du second support (52) et du couvercle (54).

5. Turbomachine selon l'une des revendications 1 à 4, **caractérisée en ce que** les extrémités des vis (32) situées à l'intérieur du couvercle portent des écrous (62).

6. Turbomachine selon l'une des revendications précédentes, **caractérisée en ce qu'**un joint annulaire d'étanchéité (80) est monté dans une gorge annulaire d'une face radiale amont du second support ou d'une face radiale aval correspondante du premier support (50).

7. Turbomachine selon l'une des revendications 1 à 6, **caractérisée en ce que** le couvercle (54) est réalisé dans un matériau ayant un coefficient de dilatation semblable à ceux du second support (52) et du carter (24).

8. Turbomachine selon l'une des revendications 1 à 7, **caractérisée en ce que** le couvercle (54) comporte un rebord cylindrique aval (68) fixé par des boulons (73) sur un rebord cylindrique aval (74) du second support (52).

9. Turbomachine selon l'une des revendications 1 à 7, **caractérisée en ce que** le couvercle (54) est fixé par des boulons sur le carter (24).

10. Couvercle annulaire de recouvrement étanche des vis de fixation d'un support de palier amont de guidage d'un arbre dans une turbomachine selon l'une des revendications 1 à 9, **caractérisé en ce que** ce qu'il a une section en U formée par deux parois cylindriques parallèles radialement interne (64) et radialement externe (66) respectivement, dont au moins la paroi radialement externe (66) comporte une gorge annulaire externe de montage d'un joint d'étanchéité (78).

11. Couvercle (54) selon la revendication 10, **caractérisé en ce qu'**il est réalisé en matériau composite ou en matériau métallique, tel que par exemple du titane.

12. Couvercle selon la revendication 10 ou 11, **caractérisé en ce qu'**il comprend un rebord cylindrique (68) s'étendant dans le prolongement de sa paroi cylindrique radialement interne (64) et à l'opposé de celle-ci et comportant des orifices régulièrement répartis de passage de moyens de fixation.

## Claims

1. A turbomachine including a shaft (14) guided in an upstream bearing (26) and a downstream bearing (28), the upstream bearing being carried by a first annular support (50) that is fastened by bolts to a casing (24) via a second annular support (52) that carries the downstream bearing (28), wherein the ends of the bolts (32) for fastening the first support to the second support are covered by an annular cover (54) sealingly fastened to the second support (52) or to the casing (24).

2. A turbomachine according to claim 1, wherein the bolts (32) for fastening the first support (50) are on the outside of the support (50).

3. A turbomachine according to claim 1 or 2, wherein the cover (54) is of U-shaped section comprising two parallel walls sealingly engaged against a cylindrical wall (70) of the second support (52) and inside a cylindrical (52) wall of the casing (24).

4. A turbomachine according to claim 3, wherein annular sealing rings (76,78,80)are mounted in annular grooves in the walls (64,66) of the cover (54) or in the cylindrical walls of the second support (52) and of the cover (54).

5. A turbomachine according to one of the claims 1 to 4, wherein the ends of the bolts (32) situated inside the cover carry nuts (62).

6. A turbomachine according to one of the preceding claims, wherein a sealing ring (80) is mounted in an annular groove in an upstream radial face of the second support or in a corresponding downstream radial face of the first support (50).

7. A turbomachine according to one of the claims 1 to 6, wherein the cover (54) is made of a material having a coefficient of expansion similar to the coefficients of expansion of the second support (52) and of the casing (24).

8. A turbomachine according to one of the claims 1 to 7, wherein the cover (54) has a downstream cylindrical rim (68) fastened by bolts (73) to a downstream cylindrical rim (74) of the second support (52).

9. A turbomachine according to one of the claims 1 to 7, wherein the cover (54) is fastened by bolts to the casing (24).

10. An annular cover (54) for sealingly covering the bolts for fastening an upstream bearing support guiding a shaft in a turbomachine according to one of the claims 1 to 9, wherein the cover presents a U-shaped section with two parallel cylindrical walls that are respectively a radially inner wall (64) and a radially outer (66) wall, with at least the radially outer wall including an outer annular groove for receiving a sealing ring (78).

11. A cover according to claim 10, made of composite material or of metal, such as titanium, for example.

12. A cover according to claim 10 or 11, including a cylindrical rim (68) extending its radially inner cylindrical wall (64) in the opposite direction and including regularly distributed orifices for passing fastener means.

## Patentansprüche

1. Turbomaschine mit einer Welle (14), die in einem vorgeschalteten Lager (26) geführt ist, das von einem ersten ringförmigen Träger (50) getragen ist, der durch Schrauben (32) über einen ein nachgeschaltetes Lager (28) zum Führen der Welle (14) tragenden zweiten ringförmigen Träger (52) an einem Gehäuse (24) befestigt ist, **dadurch gekennzeichnet, dass** die Enden der Schrauben zur Befestigung (32) des ersten Trägers an dem zweiten Träger mit einem ringförmigen Deckel (54) abgedeckt sind, der an dem zweiten Träger (52) oder an dem Gehäuse (24) dicht befestigt ist.

2. Turbomaschine nach Anspruch 1, **dadurch gekennzeichnet, dass** die Befestigungsschrauben (32) des ersten Trägers (50) außerhalb dieses Trägers (50) gelegen sind.

3. Turbomaschine nach Anspruch 1 oder 2, **dadurch gekennzeichnet, dass** der Deckel (54) einen U-förmigen Querschnitt aufweist und zwei parallele Wände umfasst, die an einer zylindrischen Wand (70) des zweiten Trägers (52) dicht angreifen und in eine zylindrische Wand (72) des Gehäuses (24) dicht eingreifen.

4. Turbomaschine nach Anspruch 3, **dadurch gekennzeichnet, dass** Ringdichtungen (76, 78, 80) in ringförmigen Nuten der Wände (64, 66) des Deckels (54) oder der zylindrischen Wände des zweiten Trägers (52) und des Deckels (54) angebracht sind.

5. Turbomaschine nach einem der Ansprüche 1 bis 4, **dadurch gekennzeichnet, dass** die Enden der Schrauben (32), die innerhalb des Deckels gelegen sind, Muttern (62) tragen.

6. Turbomaschine nach einem der vorstehenden Ansprüche, **dadurch gekennzeichnet, dass** eine Ringdichtung (80) in einer ringförmigen Nut einer vorgeordneten Radialfläche des zweiten Trägers oder einer entsprechenden
nachgeordneten Radialfläche des ersten Trägers (50) angebracht ist.

7. Turbomaschine nach einem der Ansprüche 1 bis 6, **dadurch gekennzeichnet, dass** der Deckel (54) aus einem Werkstoff gefertigt ist, der einen ähnlichen Ausdehnungskoeffizienten wie der zweite Träger (52) und das Gehäuse (24) aufweist.

8. Turbomaschine nach einem der Ansprüche 1 bis 7, **dadurch gekennzeichnet, dass** der Deckel (54) einen nachgeordneten zylindrischen Rand (68) aufweist, der durch Bolzen (73) an einem nachgeordneten zylindrischen Rand (74) des zweiten Trägers (52) befestigt ist.

9. Turbomaschine nach einem der Ansprüche 1 bis 7, **dadurch gekennzeichnet, dass** der Deckel (54) durch Bolzen an dem Gehäuse (24) befestigt ist.

10. Ringförmiger Deckel zum dichten Abdecken der Befestigungsschrauben eines Trägers eines vorgeschalteten Lagers zum Führen einer Welle in einer Turbomaschine nach einem der Ansprüche 1 bis 9, **dadurch gekennzeichnet, dass** er einen U-förmigen Querschnitt aufweist, der von zwei zylindrischen parallelen Wänden, einer radial inneren (64) bzw. einer radial äußeren (66), gebildet ist, von denen wenigstens die radial äußere Wand (66) eine ringförmige äußere Nut zum Anbringen einer Dichtung (78) aufweist.

11. Deckel (54) nach Anspruch 10, **dadurch gekennzeichnet, dass** er aus Verbundwerkstoff oder aus metallischem Werkstoff, wie zum Beispiel Titan gefertigt ist.

12. Deckel nach Anspruch 10 oder 11, **dadurch gekennzeichnet, dass** er einen zylindrischen Rand (68) aufweist, der sich in der Verlängerung seiner radial inneren zylindrischen Wand (64) und entgegengesetzt zu dieser erstreckt und gleichmäßig verteilte Öffnungen für den Durchgang von Befestigungsmitteln aufweist.
